# EUROPEAN PATENT APPLICATION

(11) **EP 3 297 286 A1**
(43) Date of publication of application: **21.03.2018**
(21) Application number: 16844586.4
(22) Date of filing: 28.07.2016
(51) Int. Cl.: H04N 19/31, H04N 19/176, H04N 19/139, H04N 19/42, H04N 19/44, H04N 19/80, H04N 19/513

(54) **VIDEO ENCODING AND DECODING METHOD AND DEVICE**

(30) Priority: 10.09.2015 US 201562216520 P
(71) Applicant: Samsung Electronics Co., Ltd., Suwon-si, Gyeonggi-do 16677 (KR)
(72) Inventor: LEE, Jin-young, Suwon-si Gyeonggi-do 16582 (KR); PARK, Min-woo, Yongin-si Gyeonggi-do 17079 (KR); KIM, Chan-yul, Bucheon-si Gyeonggi-do 14442 (KR)
(74) Representative: Appleyard Lees IP LLP
(86) International application number: PCT/KR2016/008258
(87) International publication number: WO 2017/043766

(57) **Abstract**

Disclosed is an encoding device. The present encoding device comprises a processor which: divides a target block of the current frame into a first area and a second area according to a predetermined division method and an interface communicating with a decoding device; searches for a first motion vector for the first area in a first reference frame, so as to generate a first prediction block including an area corresponding to the first area; divides the first prediction block into a third area and a fourth area according to the predetermined division method, and generates boundary information; searches for a second motion vector for the fourth area corresponding to the second area in a second reference frame, and generates a second prediction block including an area corresponding to the fourth area; merges the first prediction block and the second prediction block according to the boundary information so as to generate a third prediction block corresponding to the target block; and controls the interface to transmit the first motion vector and the second motion vector to the decoding device.

## Description

### TECHNICAL FIELD

The present disclosure relates to a video encoding and decoding method and a device thereof, and more particularly, to a video encoding and decoding method for performing inter prediction and a device thereof.

### BACKGROUND ART

With development of the electronic technology, high resolution image such as high definition (HD) image and ultra-high definition (UHD) image is provided. In order to provide a high resolution image, image compression technology with high efficiency is necessary. For example, to process an RGB image having 8 bits per component sample of 1280x720 resolution (HD) by 30 pages per one second, it is necessary to process 1280x720x8x3x30=663,552,000 bits per one second. Meanwhile, to process an RGB image having 8 bits per component sample of 3840x2160 resolution (UHD) by 30 pages per one second, it is necessary to process 3840x2160x8x3x30=5,971,968,000 bits per one second. In other words, higher resolution image requires exponentially increasing bits to be processed, and increasing image storage cost and transmission cost.

The image compression technology is provided to compress image data by partitioning one frame into a plurality of blocks and removing temporal and spatial redundancy from each of the blocks to reduce bits. This is referred to as encoding an image. An example of the image compression method by way of removing spatial redundancy is to compress images using neighboring pixels of a target block to be encoded, and this is generally referred to as intra prediction encoding. An example of the image compression method by way of removing temporal redundancy is to compress images using reference block of another frame that was compressed before a target block, which is generally referred to as inter prediction encoding.

To encode a target block, the conventional inter prediction encoding used only square blocks. Further, in each of the blocks, horizontal and vertical lines of a block boundary are in parallel to horizontal and vertical lines of each of the frames.

However, an actual image has a distribution of much more objects expressed with curved lines such that, when the object expressed with curved lines is partitioned into square blocks and encoded, there occurs a problem of deteriorating accuracy. Accordingly, there is a need to encode by taking a boundary of an object included in the image into consideration.

### DETAILED DESCRIPTION

### Technical Problem

Accordingly, an object of the present disclosure is to provide a video encoding and decoding method for partitioning a target block of a current frame into a plurality of areas and performing inter prediction, and a device thereof.

### Means to solve the problem

According to an embodiment to achieve the objects mentioned above, an encoding method of an encoding device is provided, which may include: partitioning a target block of a current frame into a first area and a second area according to a preset partitioning method; searching a first motion vector with respect to the first area from a first reference frame to generate a first prediction block including an area corresponding to the first area; partitioning the first prediction block into a third area and a fourth area according to the preset partitioning method and generating the first prediction block; searching a second motion vector with respect to the fourth area corresponding to the second area in the second reference frame to generate the second prediction block including an area corresponding to the fourth area; and merging the first prediction block and the second prediction block according to the boundary information to generate a third prediction block corresponding to the target block.

According to an embodiment to achieve the objects mentioned above, a decoding method of a decoding device is provided, which may include: receiving a first motion vector searched in a first reference frame and a second motion vector searched in a second reference frame with respect to a target block to be decoded in a current frame; generating a first prediction block and a second prediction block based on the first motion vector and the second motion vector in the first reference frame and the second reference frame respectively; partitioning the first prediction block into a plurality of areas according to a preset partitioning method and generating boundary information; and merging the first prediction block and the second prediction block according to the boundary information to generate a third prediction block corresponding to the target block.

Meanwhile, according to an embodiment of the present disclosure, an encoding device is provided, which may include: an interface in communication with a decoding device; and a processor configured to: partition a target block of a current frame into a first area and a second area according to a preset partitioning method; search a first motion vector with respect to the first area from a first reference frame to generate a first prediction block including an area corresponding to the first area; partition the first prediction block into a third area and a fourth area according to the preset partitioning method; generate boundary information; search a second motion vector with respect to the fourth area corresponding to the second area in a second reference frame to generate a second prediction block including an area corresponding to the fourth area; merge the first prediction block and the second prediction block according to the boundary information to generate a third prediction block corresponding to the target block; and control the interface to transmit the first motion vector and the second motion vector to the decoding device.

Meanwhile, according to an embodiment of the present disclosure, a decoding device is provided, which may include: an interface in communication with an encoding device; and a processor configured to: when a first motion vector searched in a first reference frame and a second motion vector searched in a second reference frame are received from the encoding device with respect to a target block to be decoded in a current frame, generate a first prediction block and a second prediction block based on the first motion vector and the second motion vector in the first reference frame and the second reference frame respectively; partition the first prediction block into a plurality of areas according to a preset partitioning method; generate boundary information; and merge the first prediction block and the second prediction block according to the boundary information to generate a third prediction block corresponding to the target block.

### Advantageous Effects

According to various embodiments described above, accuracy of prediction can be enhanced as inter prediction is performed by partitioning a target block of a current frame into a plurality of areas according to pixel values of the target block.

### BRIEF DESCRIPTION OF THE DRAWINGS

FIG. 1 is a block diagram illustrating a constitution of an encoding device for understanding of the present disclosure.
FIG. 2 is a block diagram illustrating a constitution of a decoding device for understanding of the present disclosure.
FIG. 3 is a brief block diagram provided to explain an encoding device according to an embodiment.
FIGS. 4a and 4b are diagrams provided to explain a method for partitioning a target block according to an embodiment.
FIG. 5 is a diagram provided to explain a method for generating a prediction block according to an embodiment.
FIGS. 6a and 6b are diagrams provided to explain boundary information according to an embodiment.
FIG. 7 is a diagram provided to explain a method for merging a prediction block according to an embodiment.
FIG. 8 is a brief block diagram provided to explain a decoding device according to an embodiment.
FIG. 9 is a flowchart provided to explain a method of an encoding device for generating a prediction block according to an embodiment.
FIG. 10 is a flowchart provided to explain a method of a decoding device for generating a prediction block according to an embodiment.

### BEST MODE

Various embodiments of the present disclosure will be explained in detail below with reference to the drawings. The description provided herein should not limit the scope of the present invention to any specific embodiments, but rather be construed as including various modifications, equivalents and/or alternatives. With reference to explanation of drawings, the same or similar drawing reference numerals may be used for similar elements.

Further, when it is described herein that a certain element (e.g., first element) is operatively or communicatively coupled or connected to another element (e.g., second element), it is to be understood that the respective elements may not only be coupled or connected directly, but also coupled or connected through another element (e.g., third element). On the contrary, when it is described herein that a certain element (e.g., first element) is "directly coupled" or "directly connected" to another element (e.g., second element), it may be understood that yet another element (e.g., third element) may be present between the certain element and another element.

Terms used in the present disclosure are used to explain certain embodiments, and may not be intended to limit the scope of another embodiment. A singular expression may be used herein for convenience of explanation, although this may be interpreted as encompassing a plural expression unless explicitly defined otherwise in the context. Further, the terms used herein may have the same meaning as generally understood by one of ordinary skill in the art to which this invention belongs. Unless otherwise defined, all terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. Depending on cases, even the term defined herein will not be interpreted as foreclosing the embodiments of the present disclosure.

Hereinbelow, various embodiments of the present invention will be specifically explained with reference to the accompanying drawings.

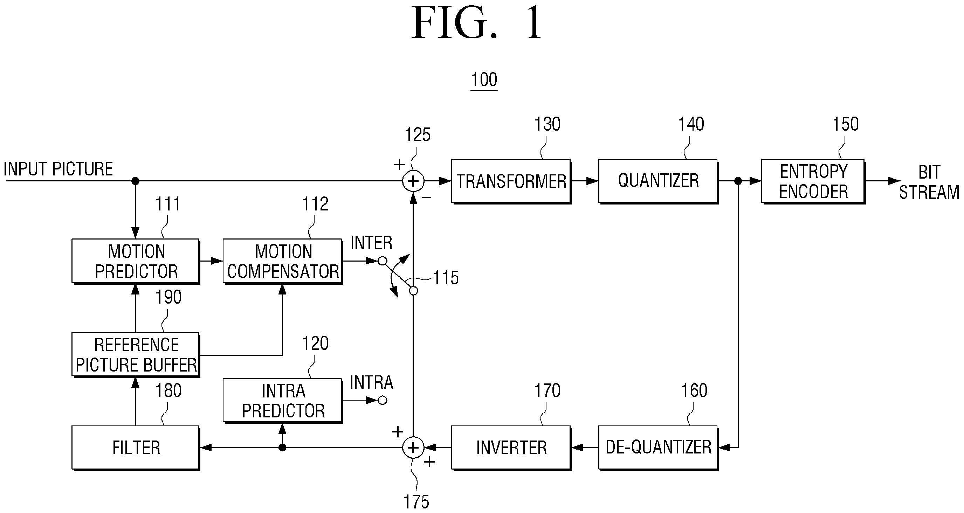

FIG. 1 is a block diagram illustrating a constitution of an encoding device 100 for understanding of the present disclosure. As illustrated in FIG. 1, the encoding device 100 includes a motion predictor 111, a motion compensator 112, an intra predictor 120, a switch 115, a subtractor 125, a transformer 130, a quantizer 140, an entropy encoder 150, a de-quantizer 160, an inverter 170, an adder 175, a filter 180, and a reference picture buffer 190.

The encoding device 100 is configured to encode and change a video into a different signal form. In this example, the video is composed of a plurality of frames and each of the frames may include a plurality of pixels. For example, the encoding device 100 may be configured for compressing the non-processed original data. Alternatively, the encoding device 100 may be configured for changing previously encoded data into another signal form.

The encoding device 100 may perform the encoding by partitioning each of the frames into a plurality of blocks. The encoding device 100 may perform the encoding through temporal or spatial prediction, transform, quantization, filtering, and entropy encoding on a block basis.

The 'prediction' refers to generating a prediction block similar to a target block to be encoded. In this example, the unit of a target block to be encoded may be defined as a 'prediction unit (PU)' and the prediction is divided into temporal prediction and spatial prediction.

The 'temporal prediction' means prediction between screens. The encoding device 100 may store some reference pictures having high correlativity with an image to be currently encoded and perform inter screen prediction using the stored pictures. In other words, the encoding device 100 may generate a prediction block from the reference picture which has been previously encoded and then decoded. In this case, it may be called that the encoding device 100 performs the inter prediction encoding.

For inter prediction encoding, the motion predictor 111 may search a block having highest temporal correlativity with a target block from the reference picture stored in the reference picture buffer 190. The motion predictor 111 may interpolate the reference picture and search a block having highest temporal correlativity with a target block from the interpolated pictures.

In this example, the reference picture buffer 190 is a space where the reference pictures are stored. The reference picture buffer 190 may be used only when performing the prediction between screens, and may store some of the reference pictures having high correlativity with the image to be encoded. The reference picture may be a picture generated as a result of sequentially performing transformation, quantization, de-quantization, inversion, and filtering residual blocks to be described below. That is, the reference picture may be the picture that was encoded and then decoded.

The motion compensator 112 may generate a prediction block based on motion information with respect to a block having highest temporal correlativity with a target block searched at the motion predictor 111. In this example, the motion information may include motion vector, reference picture index and so on.

The spatial prediction refers to the prediction within screens. The intra predictor 120 may perform the spatial prediction from neighboring pixels encoded within a current picture to generate a prediction value with respect to a target block. In this case, it may be called that the encoding device 100 performs the intra prediction encoding.

The inter prediction encoding or the intra prediction encoding may be determined on the basis of the coding unit (CU). In this example, the coding unit may include at least one prediction unit. When a prediction encoding method is determined, position of the switch 115 may be changed so as to correspond to the prediction encoding method.

Meanwhile, while the reference picture encoded and then decoded in the temporal prediction may be a picture where filtering is applied, the neighboring pixels that are encoded and then decoded in the spatial prediction may be pixels where no filtering is applied.

The subtractor 125 may generate a residual block by calculating a difference between a target block and a prediction block obtained from the temporal prediction or the spatial prediction. The residual block may be a block from which redundancy is largely removed by the predicting process, but includes information to be encoded due to incomplete prediction.

The transformer 130 may transform the residual block after prediction within or between screens to remove spatial redundancy and output a transform coefficient of a frequency domain. In this example, a unit of the transform is transform unit (TU), and may be determined regardless of the prediction unit. For example, a frame including a plurality of residual blocks may be partitioned into a plurality of transform units regardless of prediction units, and the transformer 130 may perform transforming on the basis of each of the transform units. Partitioning of the transform unit may be determined according to bit rate optimization.

However, the present disclosure may not be limited herein, and accordingly, the transform unit may be determined in association with at least one of the coding unit and the prediction unit.

The transformer 130 may perform transform to focus energy of each the transform units to a specific frequency domain. For example, the transformer 130 may focus data to a low-frequency domain by performing discrete cosine transform (DCT)-based transform with respect to each of the transform units. Alternatively, the transformer 130 may perform discrete Fourier transform (DFT)-based or discrete sine transform (DST)-based transform.

The quantizer 140 may perform quantization with respect to the transform coefficient and approximate the transform coefficient to a preset representative value. In other words, the quantizer 140 may map an input value within a specific range as one representative value. During this process, a high frequency signal that cannot be recognized by a human may be removed, and loss of information may occur.

The quantizer 140 may use one of the uniform quantization method and the nonuniform quantization method according to possibility distribution of input data or purpose of quantization. For example, the quantizer 140 may use the uniform quantization method when possibility distribution of input data is uniform. Alternatively, the quantizer 140 may use the nonuniform quantization method when possibility distribution of input data is nonuniform.

The entropy encoder 150 may reduce data amount by variably allocating length of symbol according to possibility of occurrence of symbol with respect to data inputted from the quantizer 140. In other words, the entropy encoder 150 may generate a bit stream expressing the inputted data as bit strings of variable lengths consisting of 0s and 1s based on a possibility model.

For example, the entropy encoder 150 may express input data by allocating small number of bits for a symbol having high possibility of occurrence and large number of bits for a symbol having low possibility of occurrence. Accordingly, size of the bit strings in the input data may be reduced, and compression performance of picture encoding may be enhanced.

The entropy encoder 150 may perform the entropy encoding with a Variable Length Coding or Arithmetic Coding method such as Huffman coding and Exponential-Golomb coding.

The de-quantizer 160 and the inverter 170 may receive the quantized transform coefficient and perform inversion respectively to generate restored residual blocks.

The adder 175 may add the restored residual blocks with prediction blocks obtained from the temporal prediction or the spatial prediction to generate restored blocks.

The filter 180 may apply at least one among a Deblocking Filter, a Sample Adaptive Offset (SAO), and an Adaptive Loop Filter (ALF) to the restored picture. The filtered restored picture may be stored in the reference picture buffer 190 and used as a reference picture.

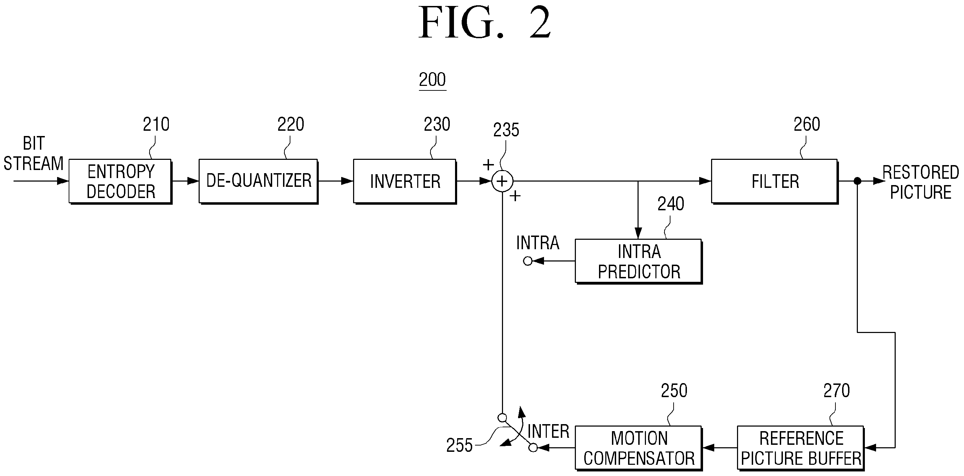

FIG.2 is a block diagram illustrating a constitution of a decoding device 200 according to an embodiment. As illustrated in FIG.2, the decoding device 200 includes an entropy decoder 210, a de-quantizer 220, an inverter 230, an adder 235, an intra predictor 240, a motion compensator 250, a switch 255, a filter 260, and a reference picture buffer 270.

The decoding device 200 may be inputted with the bit stream generated in the encoding device and perform decoding to reconstruct video. The decoding device 200 may perform decoding on the basis of block unit, through entropy decoding, de-quantization, inversion, filtering and so on.

The entropy decoder 210 may entropy decoding the inputted bit streams to generate a quantized transform coefficient. In this example, the entropy decoding may be performed by inversely applying the method used at the entropy encoder 150 of FIG. 1.

The de-quantizer 220 may receive the quantized transform coefficient and perform the de-quantization. In other words, according to operation of the quantizer 140 and the de-quantizer 220, an input value within a specific range may be changed into one reference input value within a specific range, and during this process, error may occur as much as a difference between the input value and the one reference input value.

The inverter 230 may invert the data outputted from the de-quantizer 220, and perform the inversion by inversely applying the method used at the transformer 130. The inverter 230 may perform the inversion to generate restored residual blocks.

The adder 235 may add the restored residual blocks and the prediction block to generate restored blocks. In this example, the prediction block may be block generated by the inter prediction encoding or the intra prediction encoding.

For the inter prediction encoding, the motion compensator 250 may receive from the encoding device 100 or derive (i.e., derive from neighboring blocks) motion information of the target block to be decoded and generate prediction blocks based on the received or derived motion information. In this example, the motion compensator 250 may generate prediction blocks from the reference picture stored in the reference picture buffer 270. The motion information may include a motion vector with respect to a block having highest temporal correlativity with the target block, reference picture index and so on.

In this example, the reference picture buffer 270 may store reference picture of a portion having high correlativity with the picture currently intended to be decoded. The reference picture may be a picture generated by filtering the restored blocks described above. In other words, the reference picture may be a picture in which the bit stream generated at the encoding device is decoded. Further, the reference picture used in the decoding device may be same as the reference picture used in the encoding device.

For the intra prediction encoding, the intra predictor 240 may perform the spatial prediction from neighboring pixels encoded within a current picture to generate a prediction value with respect to a target block.

Meanwhile, position of the switch 255 may be changed according to the prediction encoding method for the target block.

The filter 260 may apply at least one among the Deblocking Filter, SAO, and ALF to the restored picture. The filtered restored picture may be stored in the reference picture buffer 270 and used as a reference picture.

Meanwhile, the decoding device 200 may further include a parser (not illustrated) configured to parse information related with the encoded picture included in the bit stream. The parser may include the entropy decoder 210 and may be included in the entropy decoder 210.

As described above, the encoding device 100 may compress video data through the encoding process and transmit the compressed data to the decoding device 200. The decoding device 200 may decode the compressed data to reconstruct video.

Hereinbelow, a method for performing motion prediction for the inter prediction encoding will be explained in detail. Particularly, a method for performing the motion prediction by partitioning the target block into a plurality of areas will be explained.

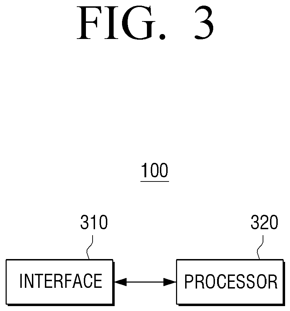

FIG.3 is a brief block diagram provided to explain an encoding device 100 according to an embodiment.

As illustrated in FIG.3, the encoding device 100 includes an interface 310 and a processor 320.

Meanwhile, FIG.3 briefly illustrates various elements by referring to an example in which the encoding device 100 is provided with a function such as a communication function, a control function and so on. Therefore, depending on embodiments, some of the elements illustrated in FIG.3 may be omitted or modified, or another new elements may be further added.

The interface 310 may perform communication with the decoding device 200. Specifically, the interface 310 may transmit the encoded bit stream, motion information and so on to the decoding device 200.

The interface 310 may perform communication with the decoding device 200 by using wire/wireless LAN, WAN, Ethernet, Bluetooth, Zigbee, IEEE 1394, Wifi, or Power Line Communication (PLC).

The processor 320 may partition the target block of a current frame to be encoded into a first area and a second area according to a preset partitioning method. In this example, the preset partitioning method may be a method for partitioning the target block into a plurality of areas based on pixel values of a plurality of pixels constituting the target block.

For example, the processor 320 may calculate an average value from the pixel values of a plurality of pixels constituting the target block and partition the target block into a first area and a second area based on the average value. Alternatively, the processor 320 may partition the target block by using a preset value instead of the average value.

Of course, the present disclosure may not be limited herein, and accordingly, the processor 320 may use any method as long as it can determine a boundary in the target block.

The processor 320 may search the first motion vector with respect to the first area in a first reference frame to generate a first prediction block including an area corresponding to the first area. In this example, the reference frame may be one of the reference pictures.

Meanwhile, the motion vector may be referred to as (Δx, Δy). For example, the first prediction block may be an area located at (-1, 5) with reference to the first area in a frame that precedes the frame having the first area by one frame. In this example, the motion vector may be a difference of same reference point between the first area and the first prediction block. For example, the motion vector may be the difference of coordinate values between a left upper point of the first area and a left upper point of the first prediction block.

The processor 320 may search an area corresponding to the first area only, rather than an area corresponding to the entire target block. In other words, the processor 320 may search a block having highest temporal correlativity with the first area, rather than searching a block having highest temporal correlativity with the target block.

Alternatively, the processor 320 may search the first motion vector with respect to the first area in the first reference frame, and generate the first prediction block corresponding to an area applying different weights to pixel values constituting the first area and the second area respectively. In this example, the processor 320 may determine weights to be applied to the first area and the second area based on pixel values constituting the first area and the second area.

When the first prediction block is generated, the processor 320 may partition the first prediction block into a third area and a fourth area according to a preset partitioning method and generate boundary information. In this example, the preset partitioning method is same as the method for partitioning the target block.

The decoding device 200 would not be able to partition the target block because it has no information with respect to the target block (original picture). However, the decoding device 200 may reconstruct a reference frame, and accordingly, may be able to partition the first prediction block which is a part of the first reference frame.

Accordingly, even when the encoding device 100 partitions the target block using a preset method and the decoding device 200 partitions the first prediction block using the same preset method, the results of such partitioning may be varied and errors may occur.

However, when the encoding device 100 partitions the first prediction block into the third area and the fourth area, errors may not occur because the decoding device 200 is able to partition the same first prediction block. Accordingly, the encoding device 100 may partition the first prediction block again when the first prediction block is generated.

Meanwhile, because the first prediction block includes an area corresponding to the first area of the target block, the third area partitioned by the same method has similar form to the first area. Accordingly, the fourth area also has similar form to the second area.

The processor 320 may search the second motion vector with respect to the fourth area corresponding to the second area in the second reference frame to generate the second prediction block including an area corresponding to the fourth area. In this example, the second reference frame may be one of the reference pictures, and it may be a different frame from the first reference frame. However, the present disclosure should not be limited herein, and the second reference frame and the first reference frame may be the same frame as each other.

The processor 320 may search an area corresponding to the fourth area only, rather than an area corresponding to the entire first prediction block. In other words, the processor 320 may search a block having highest temporal correlativity with the fourth area, rather than searching a block having highest temporal correlativity with the first prediction block.

Alternatively, the processor 320 may search the second motion vector with respect to the fourth area in the second reference frame, and generate the second prediction block corresponding to an area applying different weights to pixel values constituting the third area and the fourth area respectively. In this example, the processor 320 may determine weights to be applied to the third area and the fourth area based on pixel values constituting the third area and the fourth area.

The processor 320 may merge the first prediction block and the second prediction block according to the boundary information to generate a third prediction block corresponding to the target block. For example, the processor 320 may merge the areas corresponding to the third area of the first prediction block and the fourth area of the second prediction block to generate the third prediction block.

Meanwhile, the processor 320 may apply horizontal direction and vertical direction filtering to the boundary of the areas corresponding to the third area and the fourth area after the third prediction block is generated.

Further, the processor 320 may control the interface 310 to transmit the first motion vector and the second motion vector to the decoding device 200.

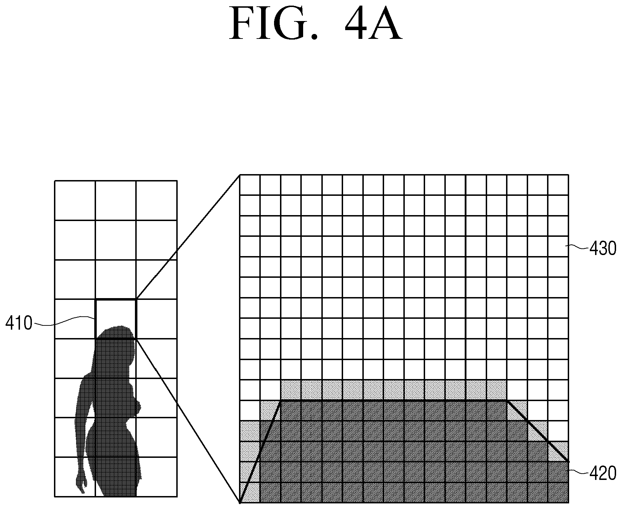

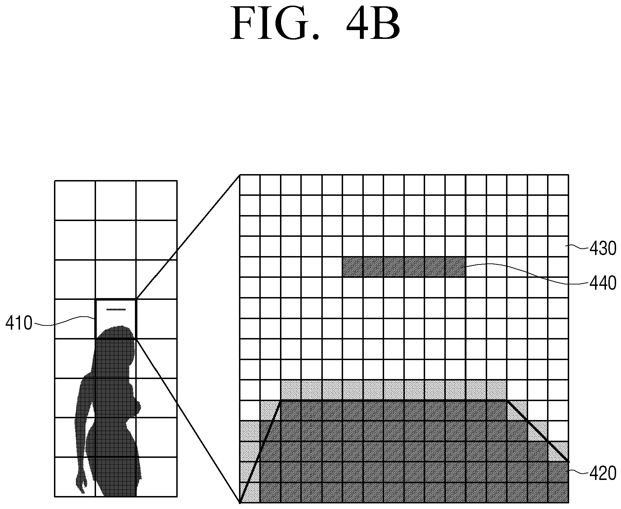

FIGS.4a and 4b are diagrams provided to explain a method for partitioning a target block according to an embodiment.

A left-hand side of FIG.4a illustrates a current frame intended to be encoded, and a right-hand side shows in enlargement the target block 410 of the current frame. The current frame may be partitioned into a plurality of same size blocks, although this is merely illustration of one of embodiments. For example, the current frame may be partitioned into a plurality of blocks of different sizes from each other, and may include rectangular blocks instead of square blocks.

As illustrated in the right-hand side of FIG.4a, the processor 320 may partition the target block 410 into a first area 420 and a second area 430 according to a preset partitioning method. For example, the processor 320 may partition the target block 410 based on a preset pixel value. The preset pixel value may be an average pixel value of a plurality of pixels constituting the target block 410. The preset pixel value may be an average pixel value of some of a plurality of pixels constituting the target block 410. Alternatively, the preset pixel value may be a pixel value set by a user.

The processor 320 may partition the target block 410 into two areas based on one pixel value, although not limited thereto. In another example, the processor 320 may partition the target block 410 into a plurality of areas based on a plurality of pixel values.

Meanwhile, as illustrated in FIG.4b, the processor 320 may partition the target block 410 into the first area 420, the second area 430, and a third area 440 based on a preset pixel value. In this case, the processor 320 may partition the target block 410 into the first area 420 and the second area 430 while ignoring the third area 440, in consideration of a number of pixels constituting the third area 440. Accordingly, the processor 320 may partition the target block 410 based on the most prominent boundary of the target block 410.

However, the present disclosure is not limited herein, and accordingly, the processor 320 may not partition the target block 410. For example, when pixel values of a plurality of pixels constituting the target block 410 are irregular, the processor 320 may not partition the target block 410.

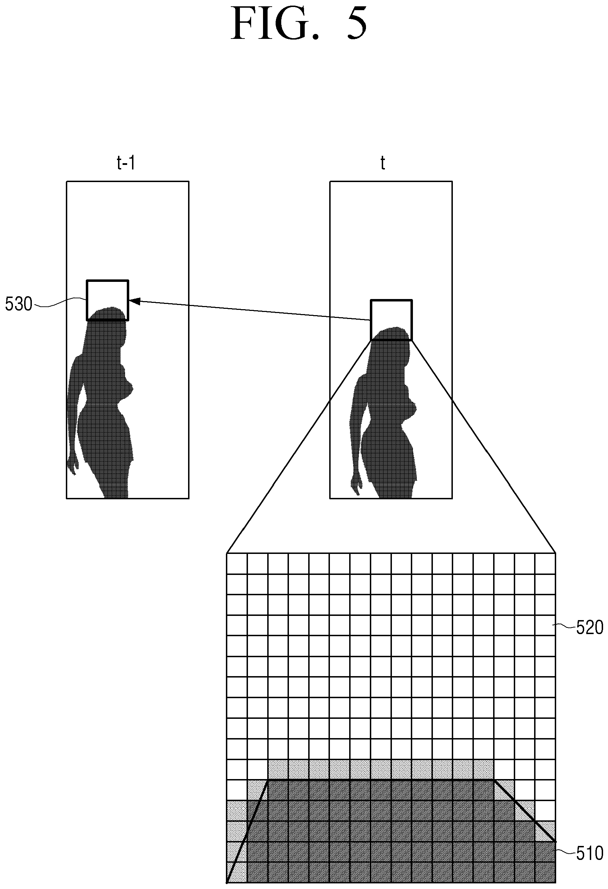

FIG. 5 is a diagram provided to explain a method for generating a prediction block according to an embodiment.

As illustrated in FIG.5, the processor 320 may search a first motion vector with respect to a first area 510 from a reference frame to generate a first prediction block 530 including an area corresponding to a first area. In this example, the processor 320 may perform the prediction without consideration of a second area 520. Alternatively, the prediction may be performed in consideration of a portion of the second area.

Alternatively, the processor 320 may search the first motion vector with respect to the first area 510 from the reference frame, and generate the first prediction block 530 corresponding to an area applying different weights respectively to pixel values constituting the first area 510 and the second area 520. In this case, the processor 320 may determine weights to be applied to the first area 510 and the second area 520 based on pixel values constituting the first area 510 and the second area 520.

For example, the processor 320 may determine weights to be applied to each of the areas so that boundary of the first area 510 and the second area 520 can stand out.

However, the present disclosure is not limited thereto, and accordingly, the processor 320 may determine the form of the first area 510 to be more important factor than the pixel values of the first area 510 and perform the prediction accordingly. Alternatively, the processor 320 may determine the form of the first area 510 to be more important factor than the form of the second area 520 and perform the prediction accordingly.

Although FIG.5 illustrates uni-directional prediction, it is to be noted that the present disclosure is not limited thereto. For example, the processor 320 may perform bi-directional prediction, and particularly, may perform bi-directional prediction only in consideration of the first area 510. In this case, the processor 320 may perform the weighted prediction.

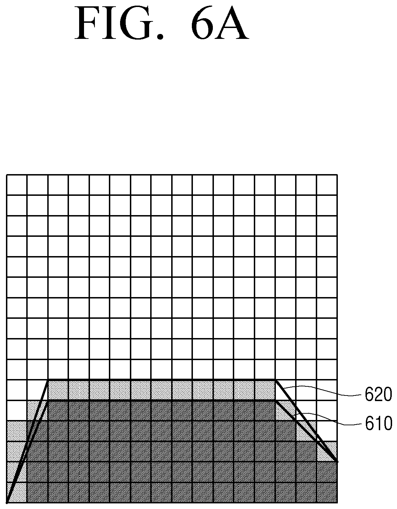

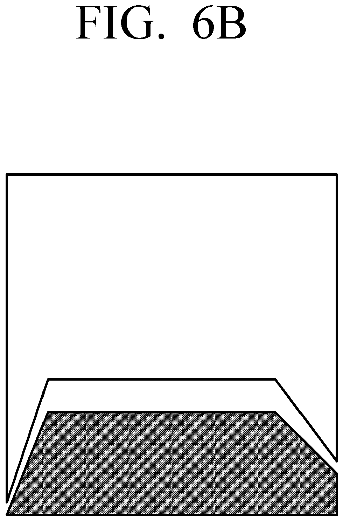

FIGS.6a and 6b are diagrams provided to explain boundary information according to an embodiment.

The processor 320 may generate a first prediction block and then partition the first prediction block with a same partitioning method as the method for partitioning a target block.

Although the first target block is similar to the target block, they may not be completely same as each other. Accordingly, as illustrated in FIG.6a, a partitioning boundary line 610 of the target block and a partitioning boundary line 620 of the first prediction block may have an error.

The processor 320 may partition the first prediction block and generate the boundary information. The boundary information may be generated as a mask of each of the areas. Alternatively, the boundary information may be the information indicating coordinate values of the boundary of each of the areas.

The processor 320 may partition a first prediction block into a third area and a fourth area, and search the second motion vector with respect to the fourth area corresponding to the second area in the second reference frame to generate the second prediction block including an area corresponding to the fourth area. As this process is same as the method for generating the prediction block of FIG.5 described above, it will not be specifically described below.

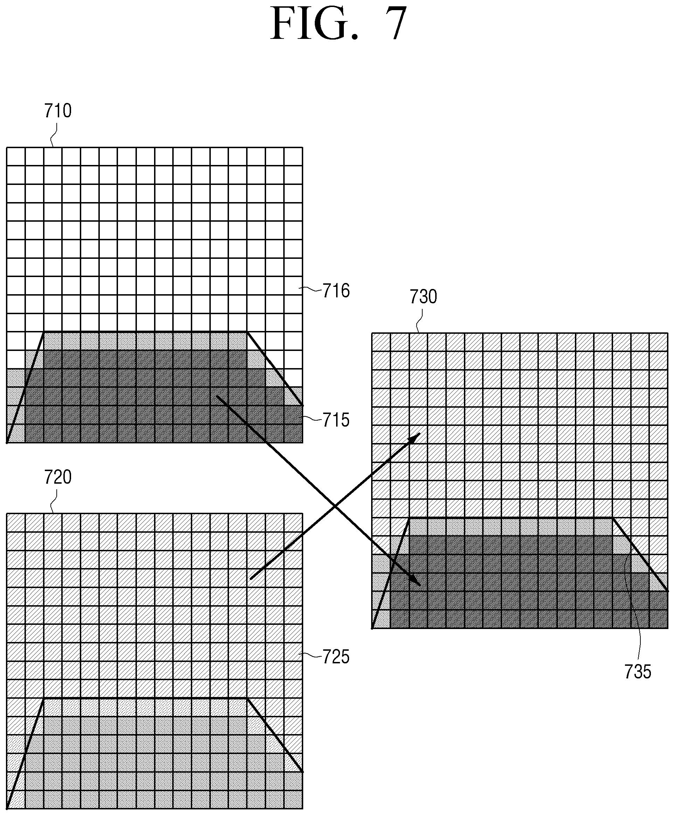

FIG. 7 is a diagram provided to explain a method for merging a prediction block according to an embodiment.

As illustrated in FIG.7, the processor 320 may merge a first prediction block 710 and a second prediction block 720 according to boundary information 735, and generate a third prediction block 730 corresponding to a target block. In this example, the boundary information 735 may be information with respect to a partitioning boundary line of the first prediction block.

Specifically, the processor 320 may merge a third area 715 of the first prediction block 710 and an area 725 corresponding to a fourth area 716 of the second prediction block 720 based on the boundary information 735. to generate the third prediction block 730.

Alternatively, the processor 320 may generate the third prediction block 730 by masking the first prediction block 710 and the second prediction block 720. Alternatively, the processor 320 may generate the third prediction block 730 by applying different weights to the first prediction block 710 and the second prediction block 720 respectively.

After the third prediction block 730 is generated, the processor 320 may then apply horizontal direction and vertical direction filtering to a boundary of the third area 715 and an area 725 corresponding to the fourth area 716. Specifically, the processor 320 may determine filter coefficient and size in consideration of the characteristics of the third prediction block 730.

Meanwhile, the processor 320 may transmit the generated motion vector to the decoding device 200. The processor 320 may transmit an absolute value of the generated motion vector to the decoding device 200, and transmit a residual value from the prediction motion vector. In this example, the processor 320 may use different prediction motion vectors from each other with respect to each of the partitioned areas.

By referring to FIGS.3 to 7, the operation of generating the prediction block in the encoding device 100 has been described. As the operation of the encoding device 100 after the generation of the prediction block is identical to that explained above with reference to FIG. 1, it will be not further described below.

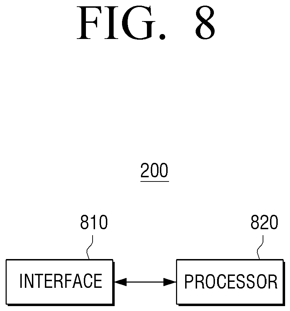

FIG. 8 is a brief block diagram provided to explain a decoding device 200 according to an embodiment.

As illustrated in FIG.8, the decoding device 200 includes an interface 810 and a processor 820.

Meanwhile, FIG.8 briefly illustrates various elements by referring to an example in which the decoding device 200 is provided with a function such as a communication function, a control function and so on. Therefore, depending on embodiments, some of the elements illustrated in FIG.8 may be omitted or modified, or another new elements may be further added.

The interface 810 may perform communication with the encoding device 100. Specifically, the interface 810 may receive the encoded bit stream, motion information and so on from the encoding device 100.

The interface 810 may perform communication with the encoding device 100 by using wire/wireless LAN, WAN, Ethernet, Bluetooth, Zigbee, IEEE 1394, Wifi, or Power Line Communication (PLC).

With respect to the target block to be decoded in a current frame, the processor 820 may receive the first motion vector searched in the first reference frame and the second motion vector searched in the second reference frame from the encoding device 100. In this example, the processor 820 may receive absolute values of the first motion vector and the second motion vector from the encoding device 100.

Alternatively, the processor 820 may receive residual values from the prediction motion vectors. In this example, the processor 820 may receive residual values of using different prediction motion vectors from each other with respect to each of the partitioned areas.

When the residual value is received, the processor 820 may add the prediction motion vector with the residual value to calculate a motion vector.

The processor 820 may generate a first prediction block and a second prediction block based on the first motion vector and the second motion vector in the first reference frame and the second reference frame, respectively. In this example, the first reference frame and the second reference frame may be the same reference frame. Further, the reference frame may be one of the reference pictures.

Further, the processor 820 may partition the first prediction block into a plurality of areas according to a preset partitioning method and generate boundary information. In this example, the preset partitioning method is same as the preset method for partitioning the target block used in the encoding device 100.

For one example of the partitioning method, a method may be provided, which partitions the first prediction block into a plurality of areas based on pixel values of a plurality of pixels constituting the first prediction block.

The processor 820 may merge the first prediction block and the second prediction block according to the boundary information to generate a third prediction block corresponding to the target block.

Specifically, according to the preset partitioning method, the processor 820 may partition the first prediction block into the first area and the second area, and merge the areas corresponding to the first area of the first prediction block and the second area of the second prediction block based on the boundary information to generate the third prediction block. However, this is merely one of embodiments, and in another embodiment, the first prediction block may be partitioned into three or more areas to generate the third prediction block.

The processor 820 may apply horizontal direction and vertical direction filtering to the boundary of the areas corresponding to the first area and the second area after the third prediction block is generated. Specifically, the processor 820 may determine filter coefficient and size in consideration of the characteristics of the third prediction block.

By referring to FIG. 8, the operation of generating the prediction block in the decoding device 200 has been described. As the operation of generating a prediction block is same as that of the encoding device 100 except for the operation of performing the prediction, specific explanation will not be redundantly provided below. Further, as the operation of the decoding device 200 after the generation of the prediction block is identical to that explained above with reference to FIG.2, it will be not further described below.

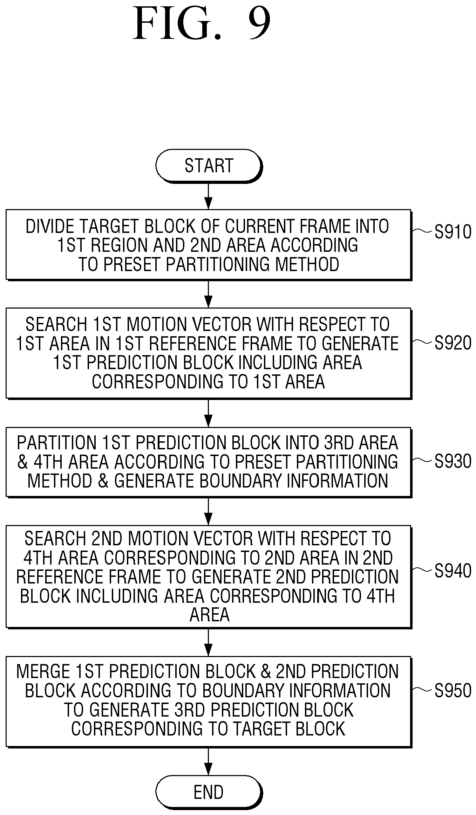

FIG. 9 is a flowchart provided to explain a method of an encoding device for generating a prediction block according to an embodiment.

First, the target block of a current frame is partitioned into a first area and a second area according to a preset partitioning method, at S910. The first motion vector with respect to the first area is then searched in a first reference frame to generate a first prediction block including an area corresponding to the first area, at S920. Further, the first prediction block is partitioned into a third area and a fourth area according to a preset partitioning method and the first prediction block is generated, at S930. Further, the second motion vector with respect to the fourth area corresponding to the second area is searched in the second reference frame to generate the second prediction block including an area corresponding to the fourth area, at S940. Further, the first prediction block and the second prediction block are merged according to the boundary information to generate a third prediction block corresponding to the target block, at S950.

In this example, the preset partitioning method may be a method for partitioning the target block into a plurality of areas based on pixel values of a plurality of pixels constituting the target block.

Meanwhile, the operation at S950 of generating the third prediction block may involve merging the areas corresponding to the third area of the first prediction block and the fourth area of the second prediction block according to the boundary information to generate the third prediction block.

Specifically, after the third prediction block is generated, horizontal direction and vertical direction filtering may be applied to the boundary of the areas corresponding to the first area and the second area.

Meanwhile, the operation at S920 of generating the first prediction block may involve searching the first motion vector with respect to the first area in the first reference frame to generate the first prediction block corresponding to the area applying different weights to pixel values constituting the first area and the second area respectively, while the operation at S940 of generating the second prediction block may involve searching the second motion vector with respect to the fourth area corresponding to the second area in the second reference frame to generate the second prediction block corresponding to the area applying different weights to the pixel values constituting the third area and the fourth area respectively.

In this example, weights to be applied to the first area and the second area may be determined based on pixel values constituting the first area and the second area, and weights to be applied to the third area and the fourth area may be determined based on the pixel values constituting the third area and the fourth area.

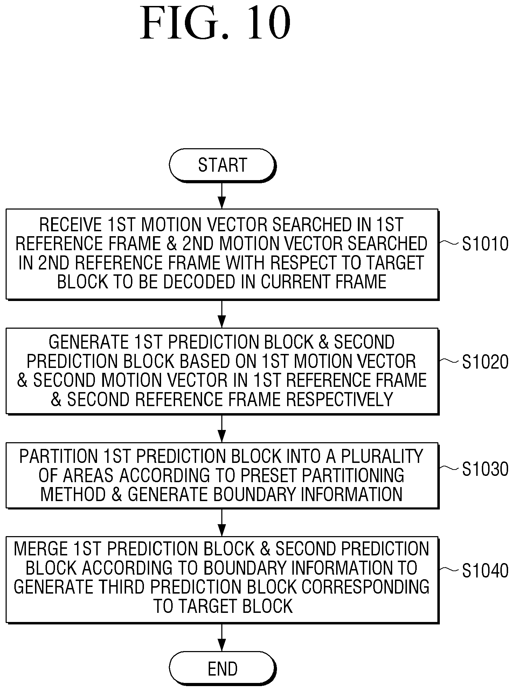

FIG. 10 is a flowchart provided to explain a method of a decoding device for generating a prediction block according to an embodiment.

First, with respect to the target block to be decoded in a current frame, the first motion vector searched in the first reference frame and the second motion vector searched in the second reference frame are received, at S 1010. A first prediction block and a second prediction block are then generated based on the first motion vector and the second motion vector in the first reference frame and the second reference frame, respectively, at S1020. Further, the first prediction block is partitioned into a plurality of areas according to a preset partitioning method and the boundary information is generated, at S1030. Further, the first prediction block and the second prediction block are merged according to the boundary information to generate a third prediction block corresponding to the target block, at S1040.

In this example, the preset partitioning method may be a method for partitioning the first prediction block into a plurality of areas based on pixel values of a plurality of pixels constituting the first prediction block.

Meanwhile, according to the preset partitioning method, the operation at S1030 of partitioning may involve partitioning the first prediction block into the first area and the second area, and operation at S1040 of generating the third prediction block may involve merging the areas corresponding to the first area of the first prediction block and the second area of the second prediction block based on the boundary information to generate the third prediction block.

In this example, after the third prediction block is generated, horizontal direction and vertical direction filtering may be applied to the boundary of the areas corresponding to the first area and the second area.

According to various embodiments described above, accuracy of prediction can be enhanced as inter prediction is performed by partitioning a target block of a current frame into a plurality of areas according to pixel values of the target block.

Meanwhile, although the it is described above that a prediction block is generated by partitioning the target block into two areas, this is merely one of embodiments. For example, the encoding device may partition a target block into three areas and generate a motion vector with respect to each of the areas.

Meanwhile, the methods according to the various embodiments may be programmed and stored in a variety of storage media. Accordingly, the methods described above according to various embodiments may be implemented in various types of the encoding devices and the decoding devices implementing the storage media.

Specifically, a non-transitory computer readable medium may be provided, storing therein a program for sequentially performing the control method according to the present disclosure.

The non-transitory computer readable medium is a medium capable of storing data semi-permanently and being readable by a device, rather than a medium such as register, cash, and memory that stores the data for a brief period of time. In particular, the various applications or programs described above may be stored and provided on a non-transitory computer readable medium such as CD, DVD, hard disk, Blu-ray disk, USB, memory card, ROM, and so on.

Further, while the present disclosure has been described in detail above, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An encoding method of an encoding device, comprising:
partitioning a target block of a current frame into a first area and a second area according to a preset partitioning method;
generating a first prediction block including an area corresponding to the first area by searching a first motion vector with respect to the first area from a first reference frame;
partitioning the first prediction block into a third area and a fourth area according to the preset partitioning method and generating boundary information;
generating a second prediction block including an area corresponding to the fourth area by searching a second motion vector with respect to the fourth area corresponding to the second area in a second reference frame; and
generating a third prediction block corresponding to the target block by merging the first prediction block and the second prediction block according to the boundary information.

2. The encoding method of claim 1, wherein the preset partitioning method is a method for partitioning the target block into a plurality of areas based on pixel values of a plurality of pixels constituting the target block.

3. The encoding method of claim 1, wherein the generating the third prediction block comprises merging areas corresponding to the third area of the first prediction block and the fourth area of the second prediction block based on the boundary information to generate the third prediction block.

4. The encoding method of claim 3, further comprising: after the third prediction block is generated, applying horizontal direction and vertical direction filtering to boundary of the areas corresponding to the third area and the fourth area.

5. The encoding method of claim 1, wherein the generating the first prediction block comprises searching the first motion vector with respect to the first area in the first reference frame to generate the first prediction block corresponding to the area applying different weights to pixel values constituting the first area and the second area respectively, and
the generating the second prediction block comprises searching the second motion vector with respect to the fourth area corresponding to the second area in the second reference frame to generate the second prediction block corresponding to the area applying different weights to the pixel values constituting the third area and the fourth area respectively.

6. The encoding method of claim 5, wherein weights to be applied to the first area and the second area are determined based on pixel values constituting the first area and the second area, and
weights to be applied to the third area and the fourth area are determined based on the pixel values constituting the third area and the fourth area.

7. A decoding method of a decoding device, comprising:
receiving a first motion vector searched in a first reference frame and a second motion vector searched in a second reference frame with respect to a target block to be decoded in a current frame;
generating a first prediction block and a second prediction block based on the first motion vector and the second motion vector in the first reference frame and the second reference frame respectively;
partitioning the first prediction block into a plurality of areas according to a preset partitioning method and generating boundary information; and
generating a third prediction block corresponding to the target block by merging the first prediction block and the second prediction block according to the boundary information.

8. The decoding method of claim 7, wherein the preset partitioning method is a method for partitioning the first prediction block into a plurality of areas based on pixel values of a plurality of pixels constituting the first prediction block.

9. The decoding method of claim 7, wherein the partitioning comprises partitioning the first prediction block into a first area and a second area according to the preset partitioning method, and
the generating the third prediction block comprises merging areas corresponding to the first area of the first prediction block and the second area of the second prediction block based on the boundary information to generate the third prediction block.

10. The decoding method of claim 9, further comprising: after the third prediction block is generated, applying horizontal direction and vertical direction filtering to boundary of the areas corresponding to the first area and the second area.

11. An encoding device, comprising:
an interface in communication with a decoding device; and
a processor configured to: partition a target block of a current frame into a first area and a second area according to a preset partitioning method; generate a first prediction block including an area corresponding to the first area by searching a first motion vector with respect to the first area from a first reference frame; partition the first prediction block into a third area and a fourth area according to the preset partitioning method; generate boundary information; generate a second prediction block including an area corresponding to the fourth area by searching a second motion vector with respect to the fourth area corresponding to the second area in a second reference frame; generate a third prediction block corresponding to the target block by merging the first prediction block and the second prediction block according to the boundary information; and control the interface to transmit the first motion vector and the second motion vector to the decoding device.

12. The encoding device of claim 11, wherein the preset partitioning method is a method for partitioning the target block into a plurality of areas based on pixel values of a plurality of pixels constituting the target block.

13. The encoding device of claim 11, wherein the processor is configured to merge areas corresponding to the third area of the first prediction block and the fourth area of the second prediction block based on the boundary information to generate the third prediction block.

14. The encoding device of claim 13, wherein the processor is configured to: after the third prediction block is generated, apply horizontal direction and vertical direction filtering to a boundary of the areas corresponding to the first area and the second area.

15. A decoding device, comprising:
an interface in communication with an encoding device; and
a processor configured to: when a first motion vector searched in a first reference frame and a second motion vector searched in a second reference frame are received from the encoding device with respect to a target block to be decoded in a current frame, generate a first prediction block and a second prediction block based on the first motion vector and the second motion vector in the first reference frame and the second reference frame respectively; partition the first prediction block into a plurality of areas according to a preset partitioning method; generate boundary information; and generate a third prediction block corresponding to the target block by merging the first prediction block and the second prediction block according to the boundary information.
